# EUROPEAN PATENT SPECIFICATION

(11) **EP 0 847 906 B1**
(45) Date of publication and mention of the grant of the patent: **19.06.2002**
(21) Application number: 97309906.2
(22) Date of filing: 09.12.1997
(51) Int. Cl.: B60R 21/32

(54) **Passenger airbag actuation system**
Insassenluftsack- Betätigungsvorrichtung
Système pour actionnement de sac gonflable d'un occupant

(30) Priority: 10.12.1996 GB 9625674
(43) Date of publication of application: 17.06.1998
(73) Proprietor: FORD MOTOR COMPANY LIMITED, Brentwood, Essex CM13 3BW (GB); FORD-WERKE AKTIENGESELLSCHAFT, 50735 Köln (DE); FORD FRANCE S.A., 92506 Rueil-Malmaison Cédex (FR)
(72) Inventor: Scott, Tim, Benfleet, Essex, SS7 5TA (GB)
(74) Representative: Messulam, Alec Moses

(56) References cited:
- EP-A- 0 689 967
- WO-A-95/11819
- GB-A- 2 289 332
- PATENT ABSTRACTS OF JAPAN vol. 096, no. 011, 29 November 1996 & JP 08 183411 A (TOKAI RIKA CO LTD), 16 July 1996,

## Description

### Field of the Invention

The invention relates to a passenger airbag actuation system which is actuated in dependence upon the production of a crash alert signal and the occupancy state of the airbag deployment zone.

In the event of impact of a vehicle the safety of the occupants are in the majority of cases increased by the use of airbags. With the increasing use of passenger airbags however a number of problems have arisen.

The term passenger will be taken to include any vehicle occupant including the driver. If the passenger is not in the optimum position i.e. leaning forwards or sideways the airbag could cause damage to the passenger. In the event that the passenger seat is occupied by a rear facing infant seat (RFIS) severe damage may occur and it is vital that the airbag does not inflate.

From a purely commercial viewpoint airbags are expensive but if there is no occupant in the seat in the airbag deployment zone it is preferable that the airbag does not inflate in the event of an impact to save money.

Many vehicles fitted with passenger airbags include airbag disabling switches which can be operated to disable an airbag if for example a RFIS is in the seat. However a plethora of systems have been proposed which automatically disable the airbag if a sensor has sensed if for some reason the airbag should not to be deployed. Sensors have been developed which detect when there is occupant what type of occupant and the position of the occupant.

Typically the actuation system for a passenger airbag (e.g. WO 95/11819) includes a crash detection system which will produce an airbag actuation signal if a crash condition occurs (typically a threshold deceleration value has been met) and an occupancy sensor system. The airbag will only be actuated if it receives actuation systems from both the crash detection system and the occupancy sensor system.

The sensors monitor the occupancy state of the airbag deployment zone continuously while the vehicle ignition switch is on and feed a signal indicative of the occupancy state to the passenger airbag actuation system. In some cases the sensors monitor the occupancy state continuously even when the ignition switch is off since the sensors can be dual purpose and used as a security system for the vehicle.

The types of sensors which have been developed include infrared, microwave, ultrasound, x-ray, magnetic resonance imaging and capacitance. At all times while the airbag system is active the sensors need to act and their design is therefore constrained by the necessity to have low exposure or irradiation levels for the vehicle occupants.

### Summary of the Invention

According to the invention there is provided a passenger airbag actuation system comprising a crash detection system which operates to produce a crash alert signal if a crash condition occurs, an occupancy sensor system operable only upon generation of a crash alert signal by the crash detection system to sense the occupancy state of the airbag deployment zone and for producing an occupancy state signal indicative of the occupancy state of the airbag deployment zone, and an actuator system for actuating the airbag dependant upon the occupancy state of the airbag deployment area.

Thus the occupancy sensor system does not operate continuously. It operates only on the production of a crash alert signal. This means that sensors may be used which have a much higher exposure/irradiation level than those conventionally used due to the dramatically reduced amount of time the detection system is operative. This means that some detection systems which were previously restricted may now be used and the robustness of the detection system may be improved.

Some airbag mechanisms are being developed whose inflation rate may be controlled. In this case the occupancy state signal may indicate the size, position and acceleration of the occupant to accordingly control the actuator system.

However in the majority of cases the occupancy state of the airbag deployment zone will be sensed as either being an airbag actuating state or an airbag disable state so that the actuator system will either deploy the airbag or not.

The actuation system may be arranged such that the crash detection system is directly connected to the occupancy sensor system and the crash alert signal acts as an activation system for the occupancy sensor system.

Alternatively the crash detection system and occupancy sensor system may be coupled by a microprocessor control such that receipt of a crash alert signal by the microprocessor control outputs an activation signal to the occupancy sensor system to determine the occupancy state of the airbag deployment zone.

The occupancy sensor system may be one which generates a positive actuation signal to trigger the actuator system to actuate the airbag or may be a negative actuation system which produces a disable signal to the actuation system so that the actuation system only operates in the absence of a negative actuation signal from the occupancy sensor system.

The occupancy sensor system may comprise sensors of a variety of types including infrared, microwave, ultrasound, x-ray, magnetic resonance imaging and capacitance or sensors which measure apnea, weight, pulse rate, respiration, movement of the occupant. Preferably the sensor system comprises sensors of at least two different types which measure different parameters. This provides more accuracy for determining the exact nature of the occupant.

Preferably the crash detection system produces a crash alert signal at least ten microseconds before an expected impact. This gives the occupancy sensor system sufficient time to monitor the occupancy state of the airbag deployment zone and to actuate the airbag if required.

Preferably the issue of a crash alert signal is used to pre-arm the actuator system to put the airbag actuation system into a state of readiness to be deployed upon receipt of the occupancy state signal.

### Brief Description of the Drawings

Two passenger airbag actuation systems in accordance with the invention will now be described by way of example only with reference to the accompanying drawings, in which : -
Figure 1 is a schematic block diagram of a first passenger airbag actuation system; and,
Figure 2 is a schematic block diagram of a second passenger airbag actuation system.

### Description of the Preferred Embodiments

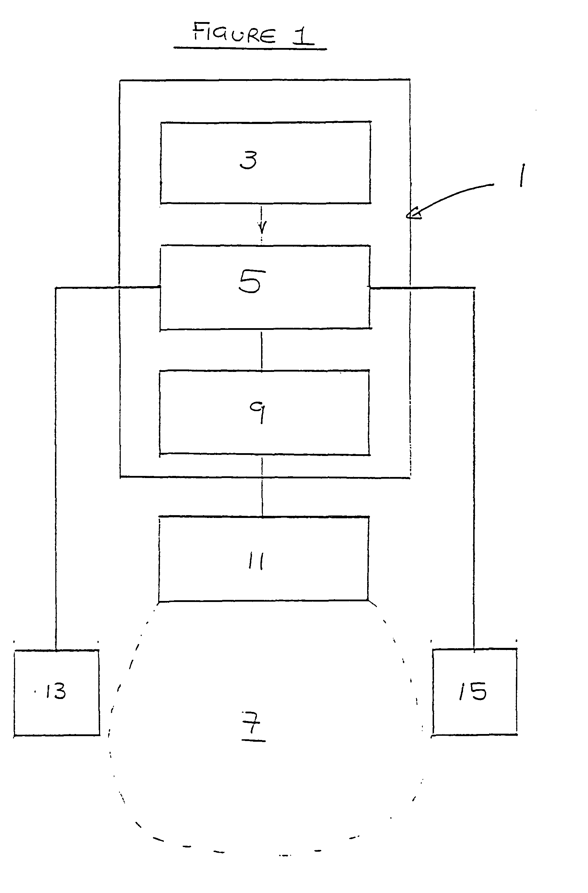

A first passenger airbag actuation system 1 is illustrated in Figure 1 and comprises a crash detection system 3 which operates to produce a crash alert signal if a crash condition occurs, an occupancy sensor system 5 operable only upon generation of a crash alert signal by the crash detection system 3 to sense the occupancy state of the airbag deployment zone 7 and for producing an occupancy state signal indicative of the occupancy state of the airbag deployment zone 7 and an actuator system 9 for actuating the airbag 11 dependent upon the occupancy state of the airbag deployment zone 7.

Here the crash detection system 3 is a conventional deceleration sensor of a type used in prior art airbag actuation systems. The choice of a suitable crash detection system will be apparent to the skilled addressee of the specification.

The occupancy sensor system 5 is coupled to the crash detection system 3 and includes two sensors 13 and 15. Sensor 13 is an infrared sensor and sensor 15 operates using magnetic resonance imaging. The use of these two sensors allows an accurate picture of the nature of the occupant of the airbag deployment zone 7.

The crash detection system 3 operates to produce a crash alert signal which is fed directly to the occupancy sensor system 5 to trigger its operation. The occupancy sensor system 5 is not operated unless and until the crash alert signal is received. On receipt of the crash alert signal the occupancy sensor system actuates and the sensors 13 and 15 are operated to monitor the occupancy state of the airbag deployment zone 7. The signals combine to provide a positive signal if the occupancy state is an airbag actuating state. If the occupancy state is a disable state then no actuating signal is fed to actuate a system 9. The actuator system 9 then feeds a signal to airbag mechanism 11 to deploy the airbag.

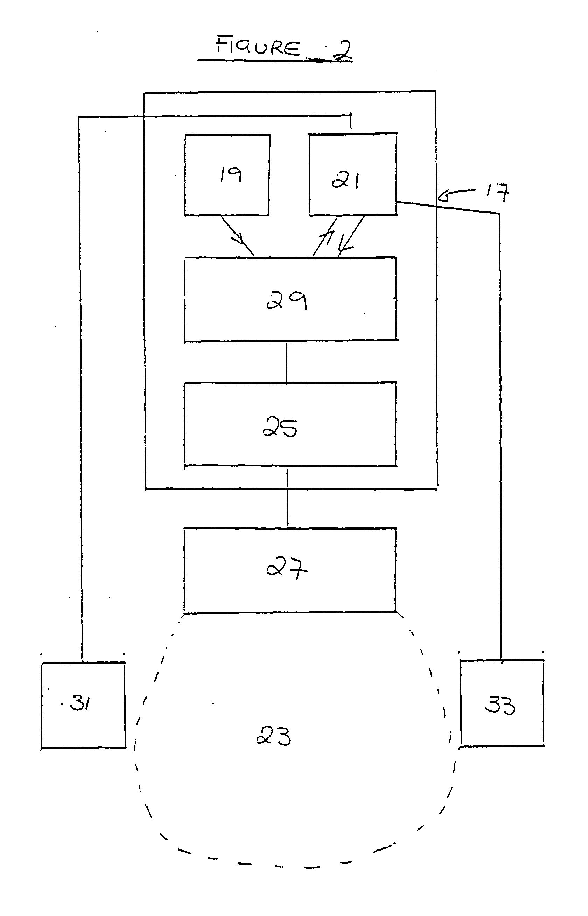

The second passenger airbag actuation system 17 illustrated in figure 2 comprises a crash detection system 19 which operates to produce a crash alert signal if a crash condition occurs, an occupancy sensor system 21 operable only upon generation of a crash alert signal by the crash detection system 19 to sense the occupancy state of the airbag deployment zone 23 and for producing an occupancy state signal indicative of the occupancy state of the airbag deployment zone 23 and an actuator system 25 for actuating the airbag 27 dependent upon the occupancy state of the airbag deployment zone 23.

The crash detection system 19 feeds a signal to microprocessor control 29 which generates an occupancy sensor system activating signal to activate the occupancy sensor system 21. The occupancy sensor system comprises two sensors 31 and 33 which are infrared and ultrasound respectively. These feed signals to the occupancy sensor system indicative of the size and acceleration of the occupant. The actuator 25 is one which allows the airbag mechanism 27 to inflate the airbag at variable rates. The microprocessor control 29 receives a signal indicative of the occupancy state of the airbag deployment zone 23 and determine the required rate of inflation of the airbag mechanism 27 thus sending a signal to actuator 25 to control the actuation.

In order to ensure the quick reaction times of the system when the microprocessor control 29 receives the crash alert signal from the crash detection system 19 a pre-arm signal is sent to actuator 25 to ensure that it is in readiness for an activate signal.

## Claims

1. A passenger airbag actuation system (1; 17) comprising a crash detection system (3; 19) which operates to produce a crash alert signal if a crash condition occurs, an occupancy sensor system (5; 21) operable only upon generation of a crash alert signal by the crash detection system (3; 19) to sense the occupancy state of the airbag deployment zone (7; 23) and for producing an occupancy state signal indicative of the occupancy state of the airbag deployment zone, (7; 23) and an actuator system (9; 25) for actuating the airbag dependent upon the occupancy state of the airbag deployment zone (7; 23).

2. A passenger airbag actuation system (1; 17) according to Claim 1 in which the occupancy sensor system (5; 21) senses whether the occupancy state is an airbag actuating state or an airbag disable state and the actuator system (9; 25) actuates the airbag if the occupancy state of the airbag deployment area is an airbag actuating state.

3. A system (1; 17) according to Claim 1 or 2, in which the crash detection system (3; 19) is connected to the occupancy sensor system, (5; 21) and the crash alert signal acts as an occupancy sensor system activation signal.

4. A system (1; 17) according to Claim 1 or 2, in which the crash detection system (3; 19) and the occupancy sensor system (5; 21) are coupled via a microprocessor control such that on receipt of a crash alert signal from the crash detection system (3; 19), the microprocessor control outputs an activation signal to the occupancy sensor system (5; 21).

5. A system (1; 17) according to any one of the preceding claims, in which the occupancy sensor system (5; 21) detects when the occupancy state of the deployment area is in an airbag actuating state to produce a positive actuation signal, and the actuation system (1; 17) operates on receipt of the positive actuation signal.

6. A system (1,17) according to any one of Claims 1 to 4, in which the occupancy sensor system (5; 21) detects when the occupancy state is an airbag disable state to produce a negative actuation signal and the actuation system (1; 17) operates in the absence of a negative actuation signal.

7. A system (1; 17) according to any one of the preceding claims, in which the occupancy system (5; 21) comprises at least two sensors (13, 15) of different type and a microprocessor for processing the information for interpreting the output of the sensors to produce an occupancy state signal.

8. A system (1; 17) according to any one of the preceding claims, in which the crash detection system (3; 19) produces a crash alert signal at least 10 microseconds before an expected impact.

9. A system (1; 17) according to any one of the preceding claims, in which generation of a crash alert signal causes a pre-arm signal to be fed to the actuator (1; 17) system to pre-arm the airbag.

## Patentansprüche

1. Beifahrer-Airbag-Auslösesystem (1; 17) mit einem Aufpralldetektorsystem (3; 19), welches derart wirkt, daß es ein Aufprallalarmsignal erzeugt, wenn eine Aufprallsituation auftritt, einem Besetzungssensorsystem (5; 21), welches nur dann betätigbar ist, wenn ein Aufprallalarmsignal von besagtem Aufpralldetektorsystem (3; 19) erzeugt wird, so daß es den Besetzungszustand in der Airbag-Entfaltungszone (7; 23) erfaßt und ein Besetzungszustandssignal erzeugt, das den Besetzungszustand in der Airbag-Entfaltungszone (7; 23) anzeigt; und mit einem Auslösesystem (9; 25) zum Auslösen des Airbag in Abhängigkeit von dem Besetzungszustand in der Airbag-Entfaltungszone (7; 23).

2. Beifahrer-Airbag-Auslösesystem (1; 17) nach Anspruch 1, worin das Besetzungssensorsystem (5; 21) erfaßt, ob der Besetzungszustand ein Airbag-Auslösezustand oder ein Airbag-Deaktivierungszustand ist, und worin das Auslösesystem (9; 25) den Airbag auslöst, wenn der Besetzungszustand im Airbag-Entfaltungsbereich einen Auslösezustand für den Airbag darstellt.

3. System (1; 17) nach Anspruch 1 oder 2, worin das Aufpralldetektorsystem (3; 19) mit dem Besetzungssensorsystem (5; 21) verbunden ist, und das Aufprallalarmsignal als Aktivierungssignal für das Besetzungssensorsystem wirkt.

4. System (1; 17) nach Anspruch 1 oder 2, in dem das Aufpralldetektorsystem (3; 19) und das Besetzungssensorsystem (5; 21) über eine Mikroprozessorsteuerung miteinander gekoppelt sind, so daß die Mikroprozessorsteuerung bei Empfang eines Aufprallalarmsignales vom Aufpralldetektorsystem (3; 19) ein Auslösesignal an das Besetzungssensorsystem (5; 21) abgibt.

5. System (1; 17) nach einem beliebigen der vorangehenden Ansprüche, in welchem das Besetzungssensorsystem (5; 21) erfaßt, wann der Besetzungszustand im Entfaltungsbereich ein Airbag-Auslösezustand ist, um so ein positives Auslösesignal zu erzeugen, und das Auslösesystem (1; 17) bei Empfang des positiven Auslösesignals aktiviert wird.

6. System (1; 17) nach einem beliebigen der Ansprüche 1 bis 4; in welchem das Besetzungssensorsystem (5; 21) erfaßt, wann ein Besetzungszustand ein Airbag-Deaktivierungszustand ist, um so ein negatives Airbag-Auslösesignal zu erzeugen, und das Auslösesystem (1; 17) bei Abwesenheit des negativen Auslösesignales aktiviert wird.

7. System (1; 17) nach einem beliebigen der vorangehenden Ansprüche, in welchem das Besetzungssensorsystem (5; 21) wenigstens zwei Sensoren (13, 15) unterschiedlicher Art aufweist, sowie einen Mikroprozessor zur Verarbeitung der Informationen zwecks Interpretation des Ausganges der Sensoren, um so ein Besetzungszustandssignal zu erzeugen.

8. System (1; 17) nach einem beliebigen der vorangehenden Ansprüche, in welchem das Aufpralldetektorsystem (3; 19) ein Aufprallalarmsignal wenigsten 10 Mikrosekunden vor einem erwarteten Aufprall erzeugt.

9. System (1; 17) nach einem beliebigen der vorangehenden Ansprüche, in welchem die Erzeugung eines Aufprallalarmsignales bewirkt, daß ein Vorschärfungssignal an das Auslösesystem (1; 17) gesendet wird, um die Airbag-Vorrichtung vorzuschärfen.

## Revendications

1. Système d'actionnement de coussin gonflable de sécurité pour passager (1 ; 17) comprenant un système de détection d'accident (3 ; 19) qui fonctionne afin de produire un signal d'alerte d'accident si un état d'accident survient, un système de capteur d'occupation (5 ; 21) pouvant être mis en oeuvre uniquement lors de la génération d'un signal d'alerte d'accident par le système de détection d'accident (3 ; 19) afin de détecter l'état d'occupation de la zone de déploiement du coussin gonflable de sécurité (7 ; 23) et en vue de produire un signal d'état d'occupation indicatif de l'état d'occupation de la zone de déploiement du coussin gonflable de sécurité (7 ; 23), et un système d'actionneur (9 ; 25) destiné à actionner le coussin gonflable de sécurité suivant l'état d'occupation de la zone de déploiement du coussin gonflable de sécurité (7 ; 23).

2. Système d'actionnement de coussin gonflable de sécurité pour passager (1 ; 17) selon la revendication 1, dans lequel le système de capteur d'occupation (5 ; 21) détecte si l'état d'occupation est un état d'actionnement de coussin gonflable de sécurité ou un état de désactivation de coussin gonflable de sécurité et le système d'actionneur (9 ; 25) actionne le coussin gonflable de sécurité si l'état d'occupation de la zone de déploiement du coussin gonflable de sécurité est un état d'actionnement de coussin gonflable de sécurité.

3. Système (1 ; 17) selon la revendication 1 ou 2, dans lequel le système de détection d'accident (3 ; 19) est relié au système de capteur d'occupation (5 ; 21), et le signal d'alerte d'accident agit comme un signal d'activation du système de capteur d'occupation.

4. Système (1 ; 17) selon la revendication 1 ou 2, dans lequel le système de détection d'accident (3 ; 19) et le système de capteur d'occupation (5 ; 21) sont couplés par l'intermédiaire d'une commande par microprocesseur de sorte que lors de la réception d'un signal d'alerte d'accident provenant du système de détection d'accident (3 ; 19), la commande par microprocesseur fournit en sortie un signal d'activation au système de capteur d'occupation (5 ; 21).

5. Système (1 ; 17) selon l'une quelconque des revendications précédentes, dans lequel le système de capteur d'occupation (5 ; 21) détecte lorsque l'état d'occupation de la zone de déploiement se trouve dans un état d'actionnement de coussin gonflable de sécurité afin de produire un signal d'actionnement positif, et le système d'actionnement (1 ; 17) est mis en oeuvre lors de la réception du signal d'actionnement positif.

6. Système (1 ; 17) selon l'une quelconque des revendications 1 à 4, dans lequel le système de capteur d'occupation (5 ; 21) détecte lorsque l'état d'occupation se trouve dans un état de désactivation de coussin gonflable de sécurité afin de produire un signal d'actionnement négatif et le système d'actionnement (1 ; 17) est mis en oeuvre en l'absence d'un signal d'actionnement négatif.

7. Système (1 ; 17) selon l'une quelconque des revendications précédentes, dans lequel le système d'occupation (5 ; 21) comprend au moins deux capteurs (13, 15) de type différent et un microprocesseur destiné à traiter les informations en vue d'interpréter la sortie des capteurs afin de produire un signal d'état d'occupation.

8. Système (1 ; 17) selon l'une quelconque des revendications précédentes, dans lequel le système de détection d'accident (3 ; 19) produit un signal d'alerte d'accident au moins dix microsecondes avant un choc attendu.

9. Système (1 ; 17) selon l'une quelconque des revendications précédentes, dans lequel la génération d'un signal d'alerte d'accident amène un signal de pré-armement à être appliqué au système d'actionneur (1 ; 17) afin d'armer à l'avance le coussin gonflable de sécurité.
